# EUROPEAN PATENT SPECIFICATION

(11) **EP 1 521 003 B1**
(45) Date of publication and mention of the grant of the patent: **10.01.2007**
(21) Application number: 04255811.4
(22) Date of filing: 23.09.2004
(51) Int. Cl.: F16D 21/06, F16D 25/10, F16D 25/12, F16D 48/04, F16D 25/0638

(54) **Oil management system for dual clutch transmissions**
Ölverwaltungssytem für Doppelkupplungsantrieb
Sytème de gestion d'huile pour transmission d'embrayage double

(30) Priority: 30.09.2003 US 507432
(43) Date of publication of application: 06.04.2005
(73) Proprietor: BorgWarner Inc., Auburn Hills MI 48326 (US)
(72) Inventor: Braford, JR., Thomas E., Brighton, Michigan 48114 (US); Gerlach, Martin, 68526 Ladenburg (DE)
(74) Representative: Westphal, Klaus

(56) References cited:
- EP-A- 1 378 679
- US-A1- 2003 116 396
- US-B1- 6 523 657

## Description

### 1. Field of the Invention

The invention relates generally to a clutch mechanism for a transmission utilizing oil or other fluid systems such as those used in automotive dual clutch transmissions.

### 2. Background

One form of automotive transmissions utilizes a dual clutch system to transmit torque to a gear box or other gear shifting mechanism. Such dual clutch systems may be used in manual, an assisted manual or automatic transmissions. Dual clutch systems typically are provided with a single torque input from the engine that is transferred by the clutch to one of a pair of shafts out of the clutch to the transmission gear box.

The torque input is transferred to the output shafts through a pair of selectively engageable, compressible stacks of clutch disks. Such dual clutch systems typically have a first and a second clutch stack, and each stack has a set of driving disks and a set of driven disks. The driving disks are operatively connected to the torque input, and the driven disks are operatively connected to one of the output shafts. In the gear box, the output shafts provide torque to different gear sets. For example, one of the clutch stack/output shafts can provide torque to the even numbered gears in the gear box and the other shaft can to provide torque to the odd numbered gears and a reverse gear.

By selectively compressing the disc stacks, the operator or operating system frictionally engages the driving disks and the driven disks to transmit torque to the preselected gears. The amount of torque transfer will depend on degree to which the disks are engaged, the engine speed and other related factors. Because one disk stack is inactive while the other stack is engaged, an additional gear may be selected in the gear box and engaged to the output shift connected to the inactive clutch stack. The gear shift is accomplished by disengaging the active stack and activating the inactive stack that is already engaged with the new gear. Thus, the time required to shift to the new, pre-selected gear can be reduced, clutch engagement and disengagement interruptions can be reduced, and a smoother gear shift can be accomplished.

Many dual clutch systems position the first and second clutch arrangements radially with respect to each other. In others systems, the first and second clutch arrangements are positioned parallel to each other along the principal axis of rotation of the clutch mechanism.

In many dual clutch systems, the clutch output shafts are concentrically arranged with respect to each other. One example of such an arrangement uses a first inner clutch output shaft connected to a one of clutch stacks and positioned within a hollow second, outer clutch output shaft, that is connected to the other clutch stack. The selective activation of either the first or the second clutch stacks allows for the torque input from, for example, an engine drive shaft to one of the inner or outer output shafts.

Each dutch stack can be hydraulically activated by radially extending annular pistons. The pistons often extend from a location proximate a clutch support to the outer clutch plates of each of their clutch stacks. The pistons together with an annular cylinder and/ or inner walls of the clutch define a pressure chamber for each piston. When a flow of fluid (typically a transmission oil) is applied to the pressure chamber and thus to one of the pistons, the piston contacts the clutch stack with a force sufficient to compress and frictionally engage the discs of the clutch stack.

In operation, the torque input to the clutch is transmitted through the entire clutch, rotating the clutch around a central axis. In some instances, the clutch also rotates around a stationary shaft(s), and in other systems the shafts also may rotate. As a result, the clutch rotation exerts centrifugal force on the oil or other fluids in the clutch and the pressure chambers. The amount of centrifugal force at a particular point in the pressure chamber will vary with the rotational speed of the assembly, the engine and the fluid's distance from the clutch axis of rotation. In many applications, the effects of such centrifugal forces cause the fluids within the pressure chamber exert unwanted pressure on the pistons. This undesirable pressure tends to urge the piston to self-engage with its respective plate stack or to resist the disengagement of the piston from the plate stack.

Accordingly, in many systems, it is desirable to provide a balancing force against the piston sufficient to reduce or offset the effect of centrifugal forces on the fluids in the pressure chambers. One design for compensating for the effect of the centrifugal force in the pressure chamber provides a balance chamber on the opposite side of the piston as it is disclosed e.g. in US 6,523,657 B1. This balance chamber is supplied with a transmission fluid and/or oil that also is subject to the centrifugal forces generated by the rotation of the clutch. The fluid is supplied in an amount sufficient to generate a pressure opposing and offsetting that exerted by the fluid in the pressure chamber. In many systems, the result is a general reduction or cancellation of the opposing pressures, and the net clutch application force will thus be approximately equal to the force exerted by the command pressure sent to the pressure chamber to acuate the clutch.

In "wet" clutch systems, a consistent flow of an oil, transmission fluid or other lubricating fluid, also is maintained through the clutch. The lubricating fluid flows through supply channels and through the clutch stacks providing lubrication to the clutch disks, seals and other moving parts. This fluid flow further serves an important role in cooling the clutch and particularly the disk stacks.

The fluid flow for applying pressure to the pistons, for supplying the balance chambers and for lubricating and cooling the clutch assemblies often is directed from a pump or reservoir through a series of channels located in a shaft or support surrounding the clutch output shafts. The channel system provides separate passages for separate functions within the clutch to permit use of different fluid flow rates and/or pressure for those functions.

For example, the fluid flow rate into the pressure chambers will substantially increase and decrease with the activation and deactivation of the pistons for each clutch stack. The lubricating and cooling fluid flow to the clutch disk stacks also often must be significant, and sometimes greater than that required for the piston or balance chambers. In many dual clutch systems, as a result, it is difficult to efficiently control the fluid flows for each such function.

This is a concern for the balance chambers as it is desirable to keep the fluid in balance chambers at a preferred level without unduly pressurizing them. If a balance chamber does not contain sufficient fluid, the clutch piston associated with the balance chamber will tend to self-engage the clutch stack as the engine and/or clutch rotational speed increases due to the increasing centrifugal forces. Conversely, if the fluid in the balance chamber is over-pressurized, the associated clutch will tend to self-disengage as the rotational speed of the clutch increases.

The variability of fluid flow in a dual clutch systems is also of concern in systems with a fixed or stationary fluid supply shafts under low flow rate conditions. The transfer channels in such systems typically are mounted on the upper surfaces of the sleeve and/or shaft. This requires that the fluid move out and into the balance chamber, resisting gravity and other forces that would interfere with the fluid flow. Under such low flow conditions, the fluid flow from those channels may be insufficient to maintain the balance chamber fluid levels at the desired levels.

Similarly, at times, such as a vehicle launch there may be a need for a reservoir of fluid that can be delivered into balance chambers before the vehicle is fully started and the fluid delivery system is delivering fluids to the clutch. There also may be other instances where the fluid flow is interrupted for a time and a reservoir of fluid to supply the clutch with fluid for the balance chambers is desirable.

### SUMMARY OF THE INVENTION

The present invention provides an improved fluid management system for clutch assemblies having fluid-operated pistons and fluid operated balance chambers offsetting the undesired pressures exerted by fluids within the piston chamber induced by centrifugal forces. The improved system provides an effective and cost efficient arrangement of fluid supply channels and supply openings capable of maintaining desired fluid levels in the balance chambers at low, otherwise insufficient, flow rate conditions.

In one aspect, the system utilizes a first supply opening and a second supply opening to the balance chambers, with a supply conduit connection the openings. At low flow rate conditions, a gravity assisted flow of fluids from the first opening, through the supply conduit to the second opening. The second opening is positioned provide a gravity assisted flow of fluids into the balance chambers. The use of the multiple supply openings connected by the supply conduit permits the maintenance of sufficient fluid levels in the balance chambers under low flow rate conditions that otherwise are insufficient for that purpose.

In another aspect, the system permits the efficient use of common flow channels providing fluid flow for the balance chambers and for lubrication and cooling purposes. In this aspect, the invention permits the maintenance of a consistent desired fluid flow to the balance chambers under conditions where the fluid flow for lubrication and cooling purposes exceeds that preferred for supplying the balance chambers. In yet another aspect, the improved system provides a reservoir of fluid for the balance chambers under conditions where the fluid supply is stopped or interrupted for a period of time.

In yet another aspect of the system, a dual clutch assembly is provided with a first clutch disk stack and a second clutch disk stack. The clutch is provided with torque input from an engine drive linked to the disk clutch stacks. Each clutch disk stack is associated with a pressure chamber having a piston disposed to reversibly compress the disk stack when the pressure chamber is pressurized with a fluid. The fluids used in the system typically are one or more oils, oils with additives, transmission fluids or other fluids suitable for use in automotive transmissions. Each clutch stack further is associated with a balance chamber disposed to provide pressure against the piston to counteract the effect of centrifugal forces acting on the fluids within the pressure chambers.

The first and second disk stacks are connected to a first and second clutch output shaft, respectively. The output shafts, in turn, are connected to a gear box. The first clutch output shaft is disposed to transfer torque to and drive one set of gears, and the second output shaft is disposed to transfer torque to and drive another set of gears. The specific combinations of gears driven by each shaft will depend on the specific application.

In one aspect of the invention, the clutch also is provided with a fluid source, which may, for example, include a reservoir, at least one fluid pump, one or more fluid valves, and a controller that regulates the flow of fluid to the clutch chambers. The fluid source provides the fluid flow necessary to actuate the clutch pistons, provides fluid to the balance chambers and provides a lubricating and cooling flow to the other clutch components. The clutch accordingly is provided with one or more fluid flow channels from the fluid source to the pressure chambers, balance chambers, and the lubrication and cooling paths through the clutch.

Each fluid channel is provided with channel openings disposed to deliver fluid to one of the clutch pressure chambers, to one or both balance chambers, and/or to the lubrication and cooling paths. In one aspect of the invention, the channels are formed in an sleeve mounted between the clutch output shafts and a clutch hub and/or support carrying one or both of the clutch stack assemblies. The sleeve typically is stationary during operation of the clutch so that when in operation the clutch hub, pressure chambers, balance chambers and disk stacks rotate around the sleeve. Similarly, multiple sleeves or multicomponent sleeves may be used for the same purpose, and other alternatives providing fluid channels to the other clutch components may be used in other aspects of the invention.

In this aspect, the sleeve provides a fluid channel to apply fluid pressure to the first clutch pressure chamber; a channel to apply fluid pressure to the second clutch pressure chamber; and a high capacity channel to supply flow fluid to the lubrication and cooling paths. This aspect of the invention also provides a channel to supply fluid to the balance chambers, as well as additional fluid to the lubrication and cooling paths when the fluid flow exceeds a predetermined level.

Each channel includes a channel opening in communication with a fluid passage to the appropriate chamber and/ or the lubrication and cooling paths. The channel openings are disposed circumferentially around the sleeve, and in different positions relative to the sleeve end to permit a sealing engagement of the opening and the respective fluid passages. The openings to the balance chambers include a first opening in an upper position on the sleeve, and a second opening spaced from the first opening for the supply of fluid to the balance chambers under low fluid pressure conditions.

The second, low pressure opening is in fluid communication with the first opening via a ring groove. A choke wall or segment at the end of the balance chamber supply channel directs fluid into the ring groove even at low fluid flow rates. The second low pressure opening is located in a position permitting a gravity assist to the flow of fluid to the balance chambers, for example, along a bottom section of the sleeve opposite the first opening. As a result, a consistent fluid flow is available to the balance chamber at fluid pressures that often are inadequate to permit sufficient fluid flow from the first, upper opening to the balance chambers. In conditions where the fluid flow is halted, the ring groove and the additional low pressure balance channel opening also can serve as fluid reservoirs sufficient to provide adequate balancing for small piston movements.

In this aspect, the fluid management system of the invention allows an overall reduction in fluid flow without a substantive loss in the ability to fill the balance chambers to effective levels under low pressure conditions. The invention also compensates for temporary interruptions in the fluid flow that would have impeded or interfered with the operation of previous systems. As one result, the invention can provide a more responsive clutch under a wide range of operating conditions. The invention, among other advantages, also permits the reduction in fluid flow requirements and volumes for the clutch system. Such reduction can result in reduced fluid resistence in the clutch, reduced fluid system wear and fluid volume requirements, and provide fuel savings and other cost savings to the users.

### BRIEF DESCRIPTION OF THE DRAWINGS

Figure 1 is a partial side elevation, cross sectional view of one aspect of the invention showing the a dual clutch with one arrangement of clutch stacks.

Figure 2 is a partial side elevation, cross sectional view of the aspect of the invention shown in Figure 1.

Figure 3 is a schematic illustration of the fluid flow system to the pressure chambers, balance chambers, and the lubrication and cooling paths.

Figure 4 is a partial side elevation, cross sectional view of the aspect of the invention shown in Figure 1 showing the flow of fluid to the pressure chamber for a first clutch stack.

Figure 5 is a partial side elevation, cross sectional view of the aspect of the invention shown in Figure 1 showing the flow of fluid to the pressure chamber for a second clutch stack.

Figure 6 is a partial, side elevation cross sectional view of the aspect of the invention shown in Figure 1 showing the flow of fluid to lubrication and cooling paths through the clutch stacks.

Figure 7 is a side elevation, cross sectional view of the aspect of the invention shown in Figure 1 showing the flow of fluid to the balance chambers and into the lubrication and cooling paths.

Figures 8a and 8b are an upper perspective view and a lower perspective view, respectively, of a portion of a fluid sleeve as used in the aspect of the invention shown in Figure 1 with the channel openings illustrated.

Figure 9 is a graph illustrating the effect of the invention on the flow rates directed to the balance chambers and to the lubrication and cooling paths.

It should be understood that the above figures are not necessarily to scale. In certain instances, details of the actual structure shown in the Figures which are not necessary for the understanding of the present invention have been omitted. It should also be understood that the Figures are provided to illustrate an example of the invention and that the invention is not necessarily limited to the particular example and aspects discussed herein.

### DETAILED DESCRIPTION

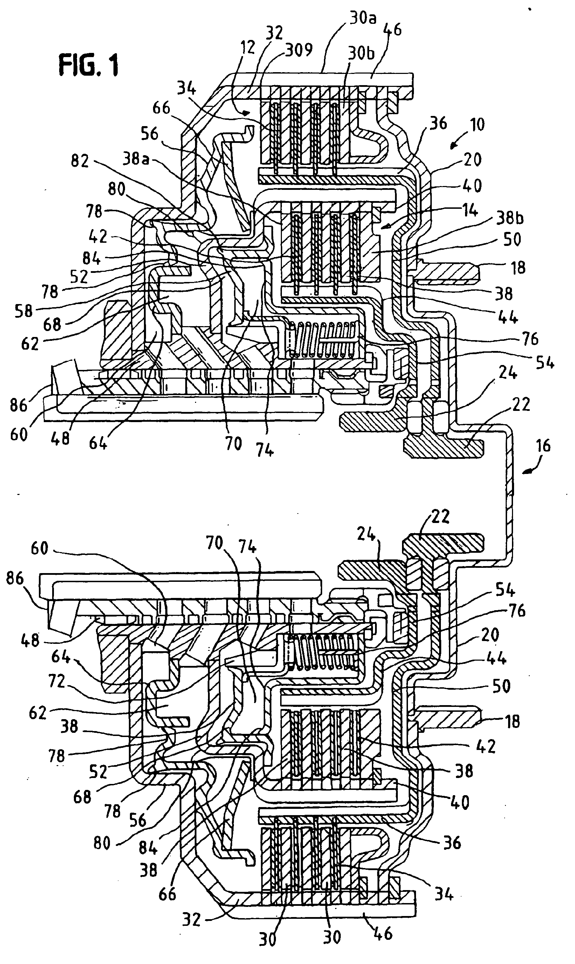

One aspect of the invention is shown in Figure 1 as employed in a dual clutch 10 with a first outer clutch disk stack 12 and a second inner clutch disk stack 14. The clutch includes a drive input hub 16 to receive a torque input from an engine draft shaft, fly wheel, torque converter or other engine drive input (not shown). In this example, the drive input hub 16 includes splines 18 to join the torque input source to an outer housing 20, which is operatively connected to the driving disks of the first 12 and second 14 clutch disk stacks.

A first clutch output spline 22 is operably connected to the driven disks of the first, outer disk stack 12, and a second clutch output spline 24 is operably connected to the driven disks of the second, inner disk stack 14. In a typical application, the second output spline 24 is keyed to a first outer drive shaft to provide driving torque to preselected gears in a gear box (not shown) when the second inner disk stack 14 is actuated. The first output spline 22 similarly is keyed to a second drive shaft (not shown) that typically is disposed within the first drive shaft. The second inner draft shaft is operatively disposed to transfer driving torque from the first outer clutch stack 12 to other, typically complementary gears in the gear box. The drive shafts also may provide driving torque to other sets of gears in the gear box such as a reverse gear.

Thus, the first 12 and second 14 disk stacks are selectively operable to transmit torque to one or more gears in the gear box in an order, and timed, to provide a desired transition between gears at selected shift points.

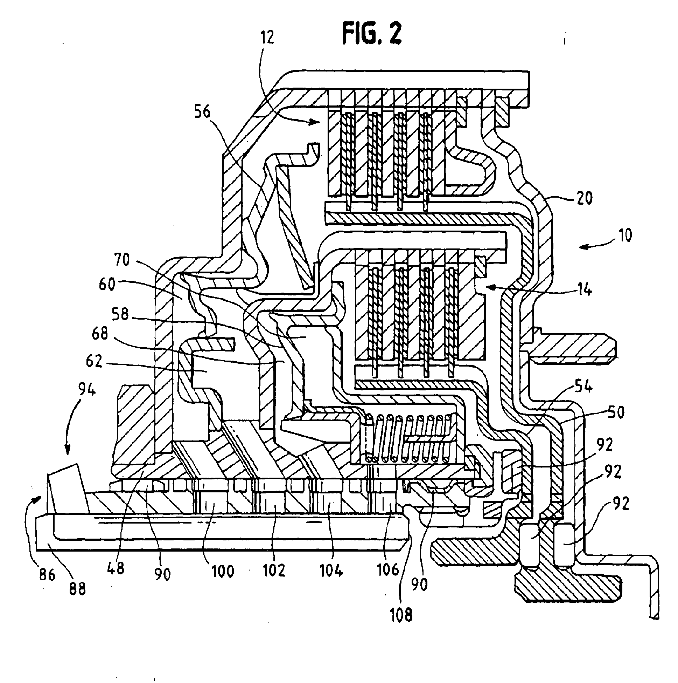

In the example shown in Figures 1 and 2, the first and second disk stacks 12 and 14 comprise a plurality of intermeshing clutch disks. The first, outer disk stack 12 includes driving clutch disks 30 mounted in a driving disk support 32. The first disk stack 12 also includes the driven disks 34 disposed between the driving disks 30 and mounted on a driven disk support 36. The outer driving disks 30 and outer driven disks 34 are reversibly, and compressively movable (typically along one or more keyways) when pressure is exerted against the end driving disk 30a, with the exception of the end disk 30b which is typically fixed.

The second, inner disk 14 stack similarly includes driving clutch disks 38 mounted in a driving disk support 40. The second stack 14 further includes the driven disks 42 disposed between the driving disks 40 and mounted on a driven disk support 44. The inner driving disks 38 and inner driven disks 42 similarly are reversibly, and compressively movable (typically along one or more keyways) when pressure is exerted against the end driving disk 38a.

The driving disks 30 and 38, and the driven disks 34 and 42 may be made a variety of materials suitable for use in clutch applications. Such materials should provide sufficient frictional engagement to efficiently transfer torque from the driving disks 30 and 38 to the driven disks 30 and 42, and are sufficiently durable to permit the repeated compressive engagement and disengagement of the disk stacks 12 and 14. Examples of such materials include steel, metal composite materials, disks provided with friction facings and similar friction materials. In this aspect of the invention, the disk stacks also are subject to a flow of lubricating and cooling fluid. According, the disk friction material in this example must be suitable for such a "wet" environment.

As shown in Figures 1 and 2, the outer stack driving disk support 32 is attached to a first, outer stack driving plate 46 fixed at one end to the outer housing 20. The opposite end of the outer stack driving plate 46 is fixed to a clutch support hub 48. The outer stack driven disk support 36 is attached at one end to an outer stack driven plate 50, which has the outer stack output shaft spline 22 at its opposite end. The inner driving disk support 44 similarly is attached to one end of a inner stack driving plate 52. The inner stack driving plate 52 is fixed at its opposite end to the clutch support hub 48. The inner driven disk support 44 is attached at one end of an inner driven plate 54, which is in turn fixed at its opposite end to the output shaft spline 24.

Accordingly, when the clutch is in operation, driving torque is transferred though the hub 16 and the outer housing 20 to the outer driving plate 46, and thereby to the the first driving disks 30 and the clutch hub 48. The clutch hub 48, in addition transfers driving torque to the inner stack driving plate 54, and thereby to the inner stack driving disks 38.

To actuate the disk stacks 12 and 14, the first outer stack 12 is provided with a first outer piston 56 selectively shiftable from an first unengaged position to a second position engaging the end driving disk 30a. When engaged, the outer piston 56 progressively compresses the outer clutch driving disks 30 and driven disks 34 together to progressively transfer driving torque from the driving disks 30 to the driven disks 32. That driving torque is thereby transmitted by the outer stack driven plates 50 to the outer output shaft spline 22 and its corresponding clutch output shaft.

Likewise, the second inner stack 14 is provided with a second inner piston 58 selectively shiftable from an unengaged position to a position engaging the end, inner driving disk 38a. The inner piston 58 progressively compresses the driving disks 38 and driven disks 42 together transferring driving torque from the driving disks 38 to the driven disks 42 and to the inner driven plate 54 and output shaft spline 24, with its attached output shaft.

The outer piston 56, in addition, separates a first outer pressure apply chamber 60 from a first outer pressure balance or compensation chamber 62. In this example, the balance chamber 62 is formed by a portion of the outer piston 56, an outer piston support wall 64 and the inner driving plate 52. A first, outer plate spring 66 is positioned in the outer balance chamber 62 engaging the outer piston 56. As illustrated in Figures 1 and 2, the first plate spring 64 biases the outer piston 56 from its engaged position to its unengaged position.

The inner piston 58 also separates a second inner pressure apply chamber 68 from a second, inner pressure balance or compensation chamber 70. In this example, the inner balance chamber 70 is formed by a portion of the inner piston 58, an inner piston support 72 and an inner balance chamber wall 74. Positioned within the inner pressure compensation chamber 70 are one or more coil springs in a spring carrier 76. The coil springs 76 bias the inner piston 58 from a position engaging the inner clutch stack 14, to an unengaged position.

The first, outer pressure apply chamber 60 is provided with one or more seals 78 that substantially prevent the flow of fluid from the pressure apply chamber 60, while permitting the reversible movement of the piston 56 from an unengaged to a position engaging the outer disk stack 12. In this example, the seals are mounted on the first outer piston 56, and are in sealing engagement with the outer driving plate 46 and the outer piston support wall 64. The outer balance chamber 62 also is provided with one or more seals 80 that substantially prevent to flow of fluid from the balance chamber 62. Other sealing arrangements may be used depending on the specific configuration and structure of the pressure apply chamber 60 and piston 56, and the balance chamber 62.

The second, inner pressure apply chamber 68 is provided with one or more seals 82 that substantially prevent the flow of fluid from the inner, pressure apply chamber 68, while permitting the reversible movement of the second, inner piston 58 from an unengaged to a position engaging the outer disk stack 14. In this example, the seals are mounted on the second, inner piston 58, and are in sealing engagement with the inner stack driving plate 52 and the inner piston support wall 72. The inner balance chamber 70 is provided with one or more seals 84 that substantially prevent to flow of fluid from the balance chamber 62. Other sealing arrangements may be used, depending on the specific configuration and structure of the pressure apply chamber 68 and piston 58, and the balance chamber 70.

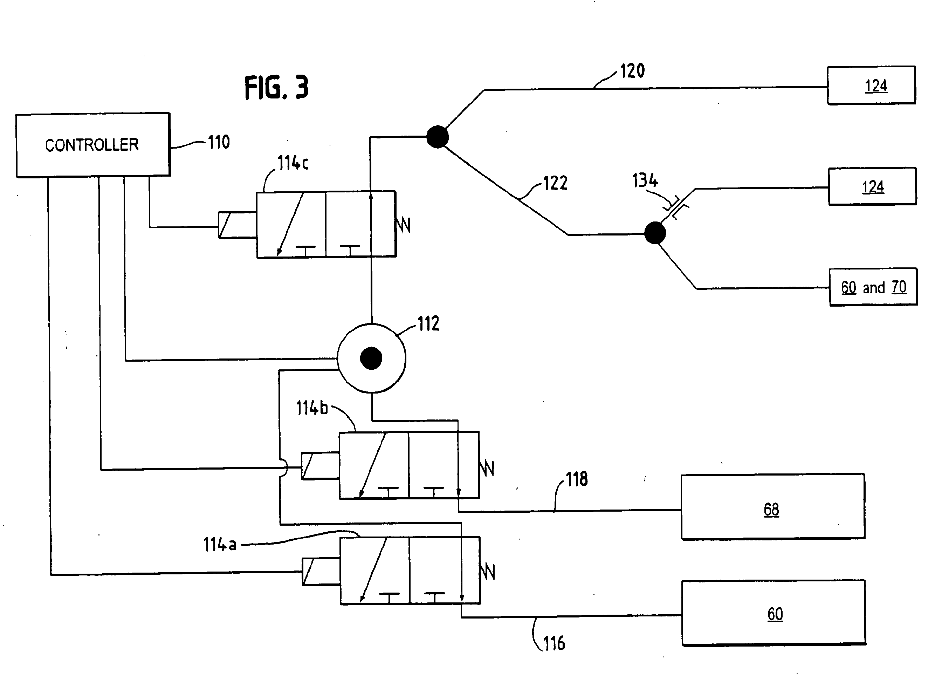

The piston 56 of the first, outer plate clutch stack is shifted from an unengaged position to a position engaging and compressing the first, outer disk stack 12 by the application of fluid pressure in the pressure apply chamber 60. The fluid pressure is supplied by an increase of fluid flow from an oil pump at the direction of a controller operating a valve as further discussed in connection with Figure 3. Sufficient fluid is supplied to the pressure apply chamber 60 to increase the fluid pressure within the chamber until the biasing force of the spring 66 is overcome and the piston 56 is moved into engagement with the disk stack pressure plate 30a. Additional fluid is supplied to the pressure chamber 60 to compress the disk stack 12 to provided the desired amount of torque transfer from the driving disks 30 to the driven disks 34.

The second inner 58 piston similarly is actuated by the supply of fluid to the second, inner pressure apply chamber 68 from the oil pump, valve and controller system. Sufficient fluid is supplied to the inner, pressure apply chamber 68 to increase the fluid pressure within the chamber overcoming the biasing force of the coil spring assembly 76. The fluid pressure is increased until the second inner piston 58 is moved into engagement with the inner disk stack pressure plate 38a, and to compress the disk stack 14 to provide the desired amount of torque transfer from the inner stack driving disks 38 to the inner stack driven disks 42.

The first 62 and second 70 balance chambers, in addition, are provided with a fluid flow sufficient to offset the pressures exerted in the outer pressure apply chamber 60 and inner pressure apply chamber 68, respectively, resulting from the centrifugal force exerted on the fluid in the pressure apply chambers 60 and 68. As the clutch 10 is rotated by the torque supplied by the engine, the acceleration of the fluid in the pressure apply chambers 60 and 68 tends to exert pressure against the pistons 56 and 58.

The pressure increases in the pressure apply chamber 60 and 68 due to centrifugal force will fluctuate depending on the rotational speed of the clutch 10, and the distance of the fluid from the clutch axis of rotation. The centrifugal force will tend to increase as the engine speed (and clutch rotation) increases and decrease as the engine speed (and clutch rotation) decreases. As discussed above, if such pressure fluctuations are unchecked, then the pistons 56 and 58 may unintentionally engage the disk stacks 12 and 14, may be subject to undesirable pressure fluctuations while operating the disk stacks, and may experience resistance to disengagement with the disk stacks.

The balance chambers 62 and 70, accordingly, are supplied with sufficient fluid to offset the pressure fluctuations in the pressure apply chambers 60 and 68 due to centrifugal forces. Because the fluids in the balance chambers 62 and 70 also are subject centrifugal forces proportionate to those exerted on the fluid in the pressure apply chambers 60 and 68, they exert pressure against the opposite side of the pistons 56 and 58 respectively. Thus, changes in the rotational speed of the clutch 10 will cause proportionate increases and decreases in pressure in both the pressure apply chambers 60 and 68, and their respective balance chambers 62 and 70. By maintaining a sufficient amount of fluid in each balance chamber 62 and 70, the fluid pressures caused by centrifugal forces in the pressure apply chambers 60 and 68 can be offset by the fluid pressures induced in the balance chambers 62 and 70.

In the example shown Figures 1 and 2, the clutch 10 rotates about a stationary support hub 86, with a fluid distribution sleeve 88 disposed between the support hub 86 and the clutch output shafts (not shown). A plurality of bearings 90, which also may act as seals, are positioned between the clutch hub 48 and the support hub 86 permitting the rotation of the clutch 10 around the support hub 86.

A plurality of roller bearings 92 are provided between the second inner driven plate 54 and the support hub 86; between the driven plate 54 and the first, driven plate 50; and between the outer housing 20 and the outer stack driven plate 50. These roller bearings 92 permit the rotation of the driven plates 50 and 54 relative to each other, relative to the clutch hub 48, and relative to the support hub 86 and the outer housing 20. In some aspects of the invention, the roller bearings 92 also may serve as seals to prevent substantial fluid leakage from the clutch.

The fluid flow for the pressure apply chambers 60 and 68, the balance chambers 62 and 70, and cooling and lubrication paths flow from a supply channel 94 that is in communication with an oil pump, valve and controller system. The fluid flows through the distribution sleeve 88 and through a one or more fluid channels in the distribution sleeve 88. The channels include openings in communication with ports in the clutch hub 48 for the supply of fluid to the pressure and balance chambers.

For example, the sleeve 88 is provided with a channel having an opening to port 100 in communication with the first pressure applying chamber 60. Similarly the sleeve 88, is provided with channels having openings in communication with port 104 to the second pressure apply chamber 68, and with openings to ports 102 and 106 to the balance chambers 62 and 70, respectively. The fluid distribution sleeve 88 further includes an opening 108, typically at a distal end of the sleeve 88, for the flow of fluid to cooling and lubrication paths and specifically to those for clutch stacks 12 and 14. The fluid distribution sleeve 88 may define other fluid paths and alternative fluid channels depending on the specific application.

Figure 3 is a schematic illustration of the fluid flow system provided by this aspect of the invention. A controller 110 is operatively connected to a fluid pump 112, and flow valves 114a, 114b, 114c that permit, limit or stop the flow of fluid from the pump 112 and a fluid reservoir (not show). The controller 110, in this example, is part of an automotive engine control system, and typically includes a microprocessor programed to monitor a variety of data (shifting input from the clutch operator, engine speed, accelerator position, engine and/or vehicle loading, engine temperature, etc.). Other types of controllers may be used in the claimed system, including mechanical, electrical, and combination controllers.

Based on the controller programing, and input from the operator and vehicle, the controller directs the pump 112 to increase or decrease the fluid flow, and directs the valves 114 to open or close as appropriate for the desired operation of the clutch 10. In the example shown in Figure 3, the controller may direct the flow of fluid from the pump 112 through the valve 114a to a supply fluid flow to the first outer pressure apply chamber 60, and through valve 114b to the second inner pressure apply chamber 68.

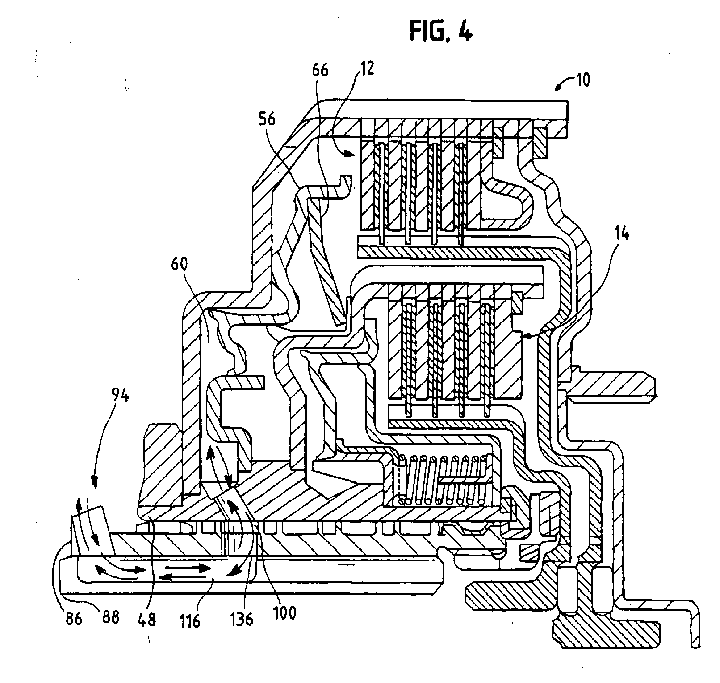

As shown in Figures 3 and 4, the fluid controlled by the valve 114a flows through a supply channel 116 in the sleeve 88, through the port 100 in the hubs 48 and 86 to the first outer pressure apply chamber 60. As mentioned above, as the fluid pressure increases the first outer piston 56 moves into actuating engagement with the first outer disk stack 12. The reduction of the fluid pressure with the closing of the valve 114a similarly permits the spring 66 to disengage the piston 56 from the disk stack 12.

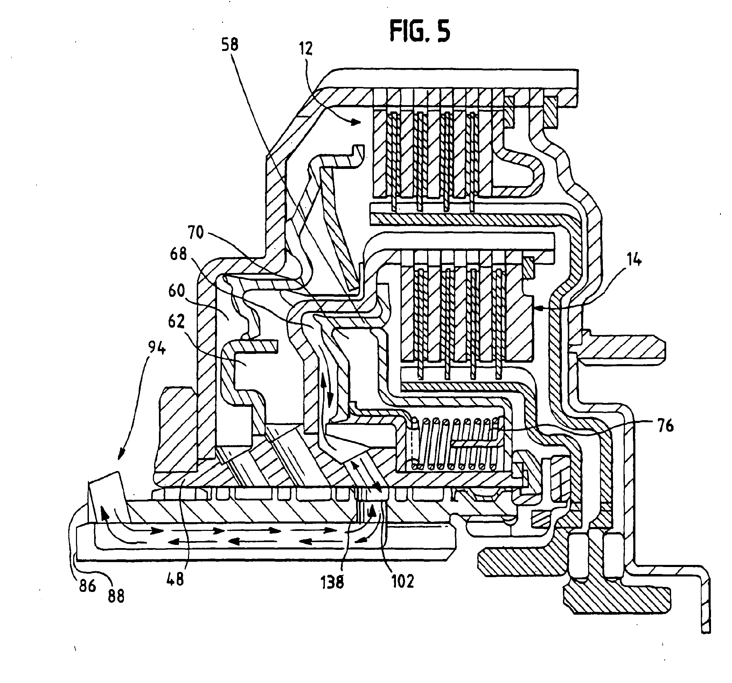

As shown in Figures 3 and 5, the fluid controlled by the valve 114b flows through a supply channel 118 in sleeve 88, through the port 102 in the hubs 48 and 86 and into the second, inner, pressure apply chamber 68. The increasing fluid pressure urges the second inner piston 58 into actuating engagement with the second inner disk stack 14. The reduction of the fluid pressure with the closing of the valve 114b permits the coil spring 76 to disengage the piston 58 from the disk stack 14.

By opening and closing the valves 114a and 114b, the controller may selectively, partially and/or fully engage of the disk stacks 12 and 14 as needed to provide for the smooth transition between gear shifts. In one aspect, this smooth transition is accomplished by pre-engaging the next desired gear in the gear box with the appropriate clutch output shaft. When a gear shift is desired, the fully engaged clutch stack is gradually disengaged by a reduction in fluid pressure to its respective pressure apply chamber. The fluid pressure to the other clutch stack is increased, in sequence or simultaneously, until the required driving and driven disks are fully engaged completing the shift to the next, preselected gear.

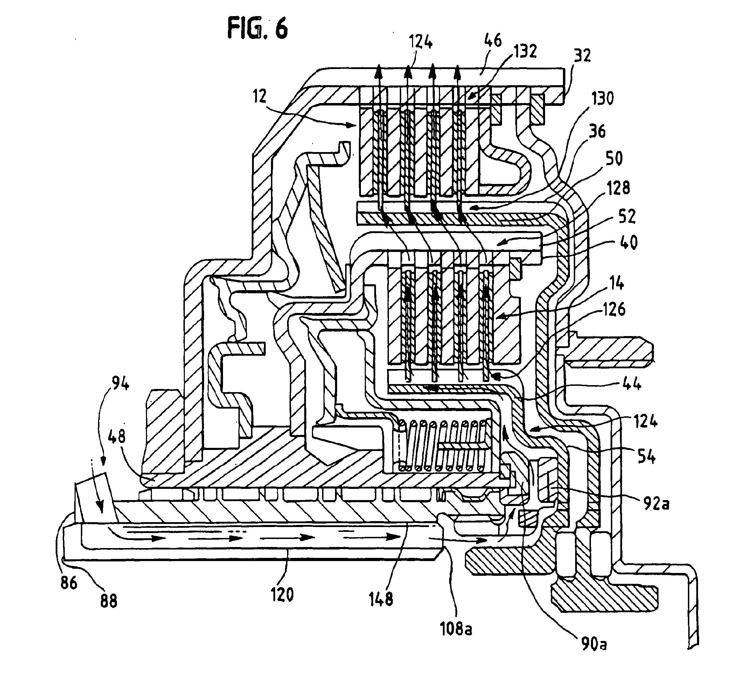

As also illustrated in Figure 3, 6 and 7 the controller 110 directs the operation of the valve 114c regulating the supply of fluid to the balance chambers 62 and 70, and the lubrication and cooling paths 124. In this example, the fluid flow is divided at the splitter 118 into a first, high capacity lubrication and cooling channel 120 and a second balance chamber channel 122. As illustrated in Figure 6, the high capacity lubrication and cooling channel 120 directs the fluid through the port 108a to the lubrication and cooling paths 124. The fluid flows along the paths 124 through or around the bearings and/ or seals 90a and 92a between the clutch hub 48, the support hub 86 and the second, inner driven plate 54. Other lubrication and cooling paths may be used as well depending on the specific application for the system.

In this example, the lubrication and cooling flow paths 124 extend through openings 126 in the inner driven plate 54 and the inner driven plate support 44; through and around the second, inner plate stack 14; and through openings 128 in the inner driving plate support 40 and the inner driving disk plate 52. The lubrication and cooling flow paths 124 also extend through the openings 130 in the outer disk driven plate 50 and outer driven disk support 36; through and around the disk stack 12; and through openings in the outer driving disk support 32 and the outer driving plate 46. The continuous flow of the fluid through the lubrication and cooling paths, returning to the fluid reservoir, assisting in the efficient and durable operation of the clutch 10.

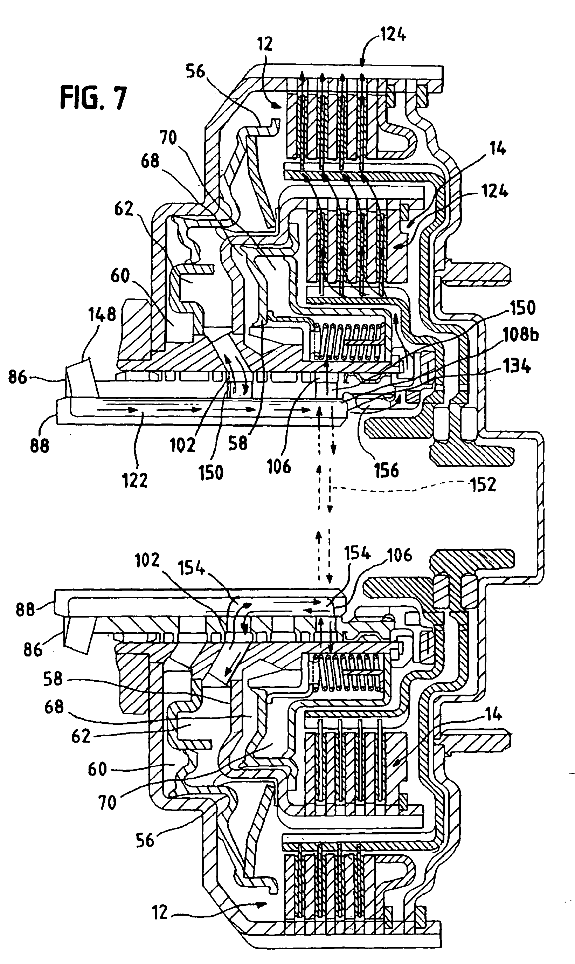

As shown in Figures 3 and 7, the balance and lubrication/ cooling flow channel 122 directs the fluid flow to the first 102 and second 106 ports for the balance chambers 62 and 70, respectively. The channel 122, in addition, is provided with a channel choke or throttle 134 that permits fluid flow through an outlet port 108b at the end of the channel 122 to the the lubrication and cooling paths 124 when the fluid flow rate in the channel 122 exceeds a predetermined level. Accordingly, the fluid flow through the channel 122 serves to maintain the fluid levels in both of the balance chambers 62 and 70, and may further supplement the lubrication and cooling flow though the clutch disk stacks 12 and 14.

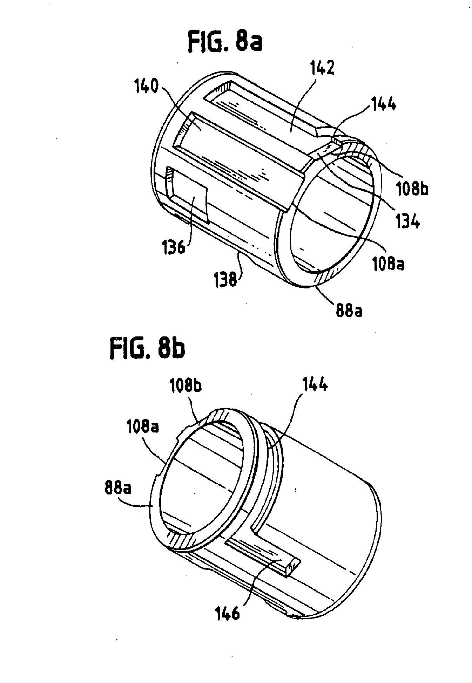

Figures 8a and 8b show an end portion 88a of the fluid supply sleeve 88 providing openings from the fluid supply channels 116,118,120 and 122 to the respective ports 100, 102, 104, 106, as well as the outlet 108 to the lubrication and cooling paths. As shown in Figure 8a and Figure 4, the end portion 88a of the fluid supply sleeve in this example is provided with an opening 136 from the channel 116 for the supply of fluid to the first outer pressure apply chamber 60 through port 100. As shown in Figures 5 and 8a, the end portion 88a of the fluid supply sleeve is provided with the opening 138 from the channel 118 to supply fluid to the second, inner pressure apply chamber 68 through port 102.

The sleeve end portion 88a also is provided with an opening 140 to the high capacity lubricant and coolant channel 120 as shown in Figures 6 and 8a.
The opening 140 extends to the outlet port at the end of the sleeve 108a permitting fluid flow to the cooling and lubricating paths 124. In this example, the high capacity channel opening 140 is sized to provide a fluid flow sufficient to substantially satisfy (and some instances exceed) the lubricating and cooling needs of the disk stacks 12 and 14.

The sleeve end portion 88a further is provided with an opening 142 to the channel 122 supplying a fluid flow to the balance chambers 62 and 70, as well as the lubrication and cooling paths 124. In this example, the opening 142 is located in the upper portion of the sleeve 88, and is sized to permit the simultaneous flow of fluid into both ports 102 and 106 to balance chambers 62 and 70. The opening 142 similarly is sized to receive a fluid flow from the balance chambers 62 and 70 through the ports 102 and 106 when the pistons 56 and 58 are actuated reducing the volume of the balance chambers 62 and 70. The opening 142, in addition, is sized to provide a flow of fluid through the port 108b to the lubrication and cooling paths 142.

The flow through port 108b is restricted by the choke or throttle 134 to maintain a predetermined amount of fluid in the channel 122 and predetermined fluid flow to the balance chamber 62 and 70. When the fluid flow through the channel 122 exceeds this predetermined level due to input from the oil pump 112 or fluid flow from the balance chambers 62 and 70, the fluid passes over the choke 134 and through the port 108b into the lubrication and cooling paths 142.

As shown in Figures 7a, 8a and 8b, the sleeve end portion 88a further is provided with a low pressure supply conduit or ring groove 144 and low pressure balance opening 146. The low pressure supply conduit 144 is in flow communication with the channel 122 and opening 142, and directs fluid to low pressure balance channel supply opening 146. The low pressure balance channel opening 146 is in flow communication with a portion of the ports 102 and 106 to the balance chambers 68 and 70. In this example, the low balance channel opening 146 is located on lower portion of the sleeve 88, opposite the upper opening 142.

The low pressure supply conduit 144 is located near the end of the opening 142 on the upper portion of the sleeve 88, and extends around the circumference of the sleeve to the low pressure balance chamber supply opening 146. The low pressure supply conduit 144, in addition, is located proximate the choke 134 to assist directing fluid into the supply conduit 144. Thus, when the fluid flow through the channel 122 is at a low rate or pressure, the choke 134 and action of gravity directs a flow of fluid into the low pressure supply conduit 144. The fluid is thereby directed to the low pressure balance channel opening 146 and is delivered to the portion of the ports 102 and 106 adjacent to the opening 146, and there through to the balance chambers 62 and 70.

Because the low pressure balance channel supply opening 146 is stationary, and below the opening 142, a fluid flow can be maintained to the balance chambers 62 and 70 even under low pressure/flow conditions where sufficient fluid flow cannot be maintained through the opening 142. While the explanation for the difference in flow rates through the opening 142 and 146 is not necessary to the invention, it is believed that this efficiency is due to the required upward flow through the opening 142 that is restrained by gravity (as well as the opening size and viscosity of the fluid), and the assist provided by gravity for the fluid flow through the supply conduit 144 and flow from the low pressure opening 146.

Thus, in this aspect of the invention, the flow of fluid through the low pressure supply conduit 144 and out of the opening 146 ensures an adequate flow rate to the balance chambers 62 and 70, which is reinforced by the choke 134 at the end of the upper opening 142. Accordingly, this aspect of the invention can provide a flow of fluid to the balance chambers under flow rates and conditions that would preclude the effective fluid flow solely through the upper opening 142.

The channel openings 136,138,140,142 and 146, in addition, are disposed circumferentially around the sleeve portion 88a, and may be staggered in different positions relative to the end of sleeve 88 to permit an effective sealing engagement with the ports 100, 102, 104, and 106. The openings 136,138,140,142 and 146 further are sized to provide the desired maximum flow rate to their respective pressure and balance chambers.

The operation and benefits of the combined use of the upper opening, 142, choke 134, low pressure supply conduit 144 and low pressure opening 146 is illustrated in the example shown in Figure 7. The fluid flow 148 through the channel 122 supplies fluid to both of the balance chambers 62 and 70 via the fluid flow 150 through the upper opening 142 in the sleeve 88, and the ports 102 and 106. The fluid flow 152 through the low pressure conduit 144 (which under low pressure conditions may be the primary or only fluid flow) is directed to the low pressure balance channel opening 146. The fluid flow 154 though the low pressure opening 146 is gravity fed into those portions of the ports 102 and 106 proximate to the low pressure opening 146. The excess fluid 156, if any, flows over the choke 134 and into the lubricant and cooling paths 124.

Moreover, the upper opening 142, the low pressure supply conduit 144 and low pressure supply opening 146 can retain sufficient fluid as a supply reservoir to the balance chambers 62 and 70 when the fluid flow rate from the pump is interrupted or stopped. Thus, the feed of this retained fluid through the low pressure opening 146 can ensure that sufficient fluid is available to the balance chambers 62 and 70 to effectively offset the effect of centrifugal forces on the pistons 56 and 58 under those conditions as discussed above.

The coordinated of fluid flow through balance chamber channel 122 and supply openings 142 and 146, the high capacity channel 120, and the port 108a can provide increased efficiencies in the operation of the clutch. Because the fluid supply to the balance chambers 62 and 70 may be maintained at low rates and/ or pressures, the drag torque due to excess fluid flow and retention in the clutch 10 may be minimized without comprising the operation of the clutch 10. Furthermore, the capacity to maintain sufficient fluid flow to the balance chambers 62 and 70, while reducing excesses or surges, reduces the opportunity for under compensating for the effect of centrifugal forces on the pistons 56 and 58 due to inadequate fluid levels in the balance chambers 62 and 70, or overfilling the balance chambers 62 and 70 and thereby exerting undesired and interfering pressure on the pistons 56 and 58.

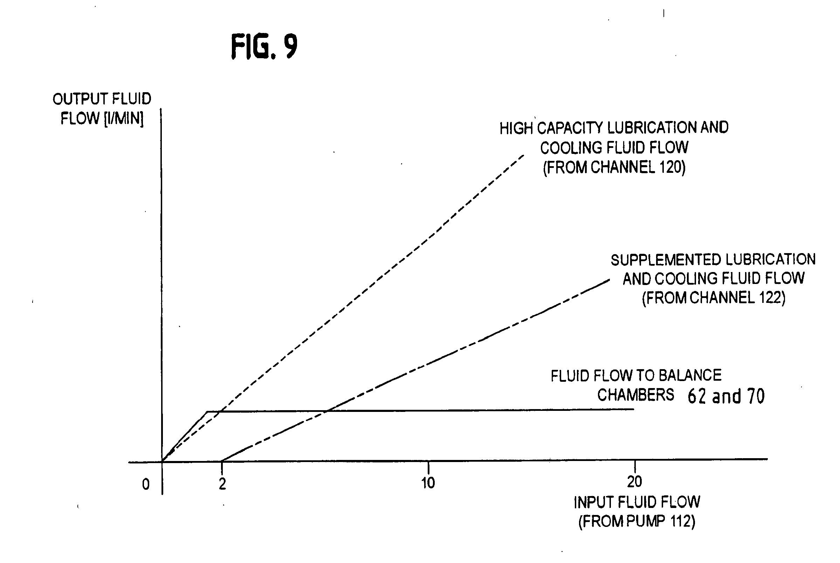

The graph shown in Figure 9 illustrates certain of the advantages of one aspect of the invention. In this example, a consistent fluid flow to the balance chambers 62 and 70 is maintained at relatively low fluid flow rates of between 0 and about 2 liters per minute from the pump 112, while also providing a fluid flow to the lubrication and cooling paths 124. As the flow rate from the pump 112 approaches and exceeds 2 liters per minute, the fluid flow to the balance chambers 62 and 70 is maintained at approximately the same flow rate. The additional fluid flow at such higher flow rates is directed through the high capacity channel 120 and through the port 108b (through the choke 134) at the end of the balance chamber supply channel 122. Thus, increases in the fluid flow necessary for lubricating and cooling purposes, or due to other fluctuations, do not cause an over supply and excess pressures in the balance chambers 62 an 70 and the consequential adverse effects on the operation of the clutch stacks 12 and 14.

In other aspects of the invention, the above described fluid delivery and management system may be adapted for use in dual clutch systems with clutch stacks disposed in a parallel relation, or in dual clutch designs of other configurations. In still other aspects of the invention, the low pressure fluid conduit 144 and low pressure opening 146 may be placed in a variety of locations along the supply channel 122 where the low pressure opening 146 is operatively associated with ports and to the balance chambers.

## Claims

1. A clutch system (10) rotatable about a central axis comprising:
a plurality of disk stacks (12,14), each disk stack (12,14) disposed to transfer torque from a torque input (16) to an output shaft (22,24),
a pressure chamber (60,68) associated with each disk stack (12,14), each pressure chamber (60,68) having a fluid supply (136, 138) and a pressure piston (56,58), the pressure piston (56,58) disposed to reversibly engage and actuate the disk stack (12,14) transferring torque from the torque input (16) to the output shaft (22,24) when the pressure chamber (60,68) is pressurized by the fluid supply (136,138);
a balance chamber (62,70) associated with each pressure piston (56,58), the balance chamber (62,70) having a fluid supply (142), the balance chamber (62,70) disposed to exert a compensating fluid pressure against the pressure piston (56,58) in opposition to fluid pressure in the pressure chamber (60,68) induced by centrifugal forces resulting from the rotation of the clutch assembly (10), and
each balance chamber (62,70) being in fluid communication with a fluid supply (144,146), **characterized in that** the fluid supply (144,146) is disposed to provide a gravity assisted flow (154) to the balance chamber (62,70) under low flow conditions effective to maintain a compensating fluid pressure in the balance chamber (62,70) offsetting the fluid pressure in the pressure chamber (60,68) induced by the centrifugal forces.

2. The clutch system of claim 1 wherein the fluid supply (144,146) is provided by a supply channel (122) with at least a first (142) and a second opening (146) in fluid communication with the the balance chamber (62,70), the second opening (146) disposed to receive fluid from the first opening (142) through a supply conduit (144) and to supply fluid to the balance chamber (62,70) by a gravity assisted flow (154).

3. The clutch system (10) of claim 2 wherein the the fluid supply (142,144,146) for each balance chamber (62, 70) is provided through a generally cylindrical supply section, the first opening (142) to the balance chamber (62, 70) is located on an upper portion of the channel section and the second opening (146) is disposed on a lower portion of the channel section, and the supply conduit (144) disposed to provide a gravity assisted flow (154) to the second opening (146).

4. The clutch system (10) of claim 3 wherein the supply section, first opening (142), supply conduit (144) and second opening (146) are sized to provide a fluid reservoir (142,144,146) effective to maintain a fluid flow (150,154) to the the balance chamber (62,70) when the fluid supply is interrupted.

5. The clutch system (10) of claim 3 wherein the supply channel (122) includes a choke (134) permitting a flow of fluid (156) to lubrication and cooling paths (124) through the clutch system (10), the choke (134) sized to permit fluid (156) flow to the lubrication and cooling paths (124) when the fluid flow in the supply channel (122) exceeds a predetermined rate.

6. The clutch system (10) of claim 5 wherein the first (142) and second (146) openings and choke (134) are sized to maintain a flow to the balance chamber (62, 70) that does not exceed a predetermined rate when the supply channel (94) flow rate increases.

7. The clutch system (10) of claim 5 wherein the choke (134) is disposed to direct a flow of fluid into the supply conduit (144) to the second channel opening (146) under low flow rate conditions.

8. A clutch system (10) according to one of claims 1 to 7, **characterized by**
a first disk stack (12) having a first set of driving disks operatively connected to a torque input (16) and a firsfset of driven disks operatively connected to a first output shaft (22) and
a second disk stack (14) having a second set of driving disks operatively connected to a torque input (16), and a second set of driven disks operatively connected to a second output shaft (24), whereas the first and second disk stacks for in together the plurality of disk stacks
a first pressure chamber (60) with a fluid supply (136) and a first pressure piston (56) movable to engage the first driving plates with the first driven plates transferring torque therebetween when the first pressure chamber (60) is pressurized by the fluid supply (136);
a second pressure chamber (68) with a fluid supply (138) and a second pressure piston (58) movable to engage the second driving plates with the second driven plates transferring torque therebetween when the second pressure chamber (68) is pressurized by the fluid supply (138),
a plurality of channels (116, 122) supplying fluid to the first (60) and second (68) pressure chambers and first (62) and second (70) balance chambers, and a high capacity fluid supply channel (120) providing a flow of cooling and lubrication fluid to the clutch assembly (10),
the fluid supply channel (122) for each balance chamber (62, 70) having a first (142) and a second (146) opening in fluid communication with the balance chamber (62,70), the second fluid opening (146) disposed to receive fluid from the first opening (142) and to supply fluid to the balance chamber (62,70) under low fluid flow rate conditions.

9. The clutch system (10) of claim 8 wherein the the fluid supply for each balance chamber (62,70) is provided by a fluid channel (142,144,146) in communication with a fluid source and control system (110), the fluid channel (142,144,146) formed in a stationary fluid supply sleeve (88) about which the clutch system (10) rotates, the first opening (142) to the balance chamber (62,70) disposed on an upper portion of the fluid supply sleeve (88), the second opening (146) formed in the surface of the sleeve (88) and disposed on a lower portion of the sleeve (88) with a fluid conduit (144) formed in the sleeve (88) joining the first (142) and second (146) openings.

10. The clutch system (10) of claim 9 wherein one fluid supply channel (122) supplies fluid flow to the first (62) and second (70) balance chambers through the first (142) and second (146) openings, the second opening (146) is disposed to receive fluid from the first opening (142) by gravity assist through the supply conduit (144) and to supply the first (62) and second (70) balance chambers with gravity assisted fluid flow (154).

11. The clutch system (10) of claim 9 wherein the supply channel (122), first opening (142), supply conduit (144), and second opening (146) are sized to provide a fluid reservoir (122,142,144,146) effective to supply the first (62) and second (70) balance chambers when the fluid supply is interrupted.

12. The clutch system (10) of claim 9 wherein the fluid supply channel (122) includes a choke (134) disposed to direct the flow of fluid to the supply conduit (144) and to permit a flow of fluid to lubrication and cooling paths (124), the choke (134) sized to permit fluid flow to the lubrication and cooling paths (124) when the fluid flow rate through the fluid supply channel (122) exceeds a predetermined level.

13. A method for providing fluid flow to balance chambers (62,70) in a clutch system (10) rotable about a central axis and having a plurality (12,19) of clutch disk stacks comprising the steps of:
providing a fluid supply and control system (110) disposed to supply fluid to the balance chambers (62,70) at a rate effective to maintain a sufficient amount of fluid in the balance chambers (62,70) to compensate for fluid pressures induced by centrifugal forces arising from the rotation of the system (10) and exerted against a pressure piston (56,58);
providing a fluid supply channel (122) for each balance chamber (62,70) having a first opening (142) in fluid communication with the balance chamber (62,70),
**characterized by** providing a second opening (146) in fluid communication with the balance chamber (62,70) spaced from the first opening (142) with a supply conduit (144) therebetween, the second opening (146) disposed to receive a fluid flow from the first opening (142) and to provide a fluid flow (158) assisted by gravity to the balance chamber (62, 70) under low flow rate conditions.

14. The method of claim 13 including providing the supply channel (122), first opening (142) second opening (146), and supply conduit (144) with sufficient volume are sized to provide a fluid reservoir (122,142,144,146) effective to supply the balance chambers (62,70) when the fluid supply is interrupted.

15. The method of claim 13 including providing the fluid supply channel (122) with a choke (134) disposed to direct the flow of fluid to the second opening (146) through the supply conduit (144) permitting a flow of fluid to system lubrication and cooling paths (124) when the fluid flow rate exceeds a predetermined level.

16. The method of claim 15 including providing a choke (134), and first (142) and second (146) openings sized to maintain a maximum fluid flow to the balance chambers (62,70) and to direct excess fluid through the choke (134) into the system lubrication and cooling paths (124).

## Patentansprüche

1. Kupplungssystem (10), welches um eine zentrale Achse drehbar ist und folgendes aufweist:
eine Vielzahl von Lamellenstapeln (12, 14), von denen jeder Lamellenstapel (12, 14) zur Übertragung eines Drehmomentes von einer Drehmomenteingangs- (16) zu einer Drehmomentausgangswelle (22, 24) ausgelegt ist;
eine Druckkammer (60, 68), die jeden Lamellenstapel (12, 14) zugeordnet ist, wobei jede Druckkammer (60, 68) eine Fluidzufuhr (136, 138) aufweist und einen Druckkolben (56, 58), wobei der Druckkolben (56, 58) derart angeordnet ist, dass er doppelseitig wirkt und den Lamellenstapel (12, 14) betätigt, um ein Drehmoment von der Drehmomenteingangs- (16) zu der Drehmomentausgangswelle (22, 29) zu übertragen, wenn die Druckkammer (60, 68) durch die Fluidzufuhr (136, 138) unter Druck gesetzt wird;
eine Ausgleichskammer (62, 70), welche jedem Druckkolben (56, 58) zugeordnet ist, wobei die Ausgleichskammer (62, 70) mit einer Fluidversorgung (14, 2), derart angeordnet ist, um einen Kompensationsfluiddruck gegen den Druckkolben (56, 58) auszuüben entgegengesetzt zu dem Fluiddruck in der Druckkammer (60, 68), induziert durch Zentrifugalkräfte, die aus der Rotation der Kupplungsanordnung (10) resultieren, und
eine Ausgleichskammer (62, 70), die in Fluidverbindung mit einer Fluidversorgung (149, 146) steht,
**dadurch gekennzeichnet, dass**
die Fluidversorgung (149, 146) zur Darstellung einer gewichtskraftunterstützten Strömung (154) zu der Ausgleichskammer (62, 70) unter niedrigen Strömungsbedingungen angeordnet ist, zur Aufrechterhaltung eines Ausgleichsfluiddrucks in der Ausgleichskammer (62, 70), wodurch der durch die Zentrifugalkräfte induzierte Fluiddruck in der Druckkammer (60, 68) ausgeglichen wird.

2. Kupplungssystem nach Anspruch 1, worin die Fluidversorgung (144, 146) durch einen Versorgungskanal (122) dargestellt wird mit zumindest einer ersten (142) und einer zweiten Öffnung (146), die in fluidischer Verbindung mit der Ausgleichskammer (62, 70) stehen, wobei die zweite Öffnung (146) zur Aufnahme von Fluid von der ersten Öffnung (142) durch eine Versorgungsleitung (144) ausgelegt ist und zur Versorgung der Ausgleichskammer (62, 70) mit Fluid mittels einer gewichtskraftunterstützten Strömung (154).

3. Kupplungssystem (10) nach Anspruch 2, worin die Fluidversorgung (142, 144, 146) für jede Ausgleichskammer (62, 70) durch einen weitestgehend zylindrischen Versorgungsabschnitt dargestellt wird und die erste Öffnung (142) zu der Ausgleichskammer (62, 70) an einem oberen Teil des Kanalabschnittes lokalisiert ist und die zweite Öffnung (146) an einem unteren Teil des Kanalabschnittes eingerichtet ist und die Versorgungsleitung (144) ist zur Darstellung einer gewichtskraftunterstützten Strömung (154) zu der zweiten Öffnung (146) ausgelegt.

4. Kupplungssystem (10) nach Anspruch 3, worin der Versorgungsabschnitt, die erste Öffnung (142), die Versorgungsleitung (144) und die zweite Öffnung (146) derart bemessen sind, dass sie ein Fluidreservoir (142, 144, 146) darstellen, welches eine Fluidströmung (150, 154) zu der Ausgleichskammer (62, 70) wirksam aufrecht erhalten kann, wenn die Fluidversorgung unterbrochen ist.

5. Kupplungssystem (10) nach Anspruch 3, worin der Versorgungskanal (122) einen Choke (134) aufweist zur Darstellung einer Fluidströmung (156) zu Schmierungs- und Kühlpfad (124) durch das Kupplungssystem (10), wobei der Choke (134) derart bemessen ist, dass ein Fluid (156) zu den Schmierungs- und Kühlpfaden (124) geführt wird, wenn die Fluidströmung in dem Versorgungskanal (122) ein vorbestimmtes Maß überschreitet.

6. Kupplungssystem (10) nach Anspruch 5, worin die erste (142) und die zweite (146) Öffnung und der Choke (134) zur Aufrechterhaltung einer Strömung zu der Ausgleichskammer (62, 70) bemessen sind, die ein vorbestimmtes Maß nicht überschreitet, wenn das Versorgungskanal- (94) Strömungsmaß ansteigt.

7. Kupplungssystem (10) nach Anspruch 5, worin der Choke (134) zur Ausrichtung einer Fluidströmung in der Versorgungsleitung (144) zu der zweiten Kanalöffnung (146) unter geringen Strömungsmaßbedingungen ausgelegt ist.

8. Kupplungssystem (10) nach einem der Ansprüche 1 bis 7, **gekennzeichnet durch**:
einen ersten Lamellenstapel (12) mit einem ersten Satz von Antriebslamellen, die funktionell mit einem Eingangsdrehmoment (16) verbunden sind, und einem ersten Satz von angetriebenen Lamellen, welche funktionell mit einer ersten Ausgangswelle (22) verbunden ist, und
einen zweiten Lamellenstapel (14) mit einem zweiten Satz von Antriebslamellen, welche funktionell mit einem Eingangsdrehmoment (16) verbunden sind und einen zweiten Satz von angetriebenen Lamellen, welcher funktionell mit einer zweiten Ausgangswelle (24) verbunden ist, während der erste und der zweite Lamellenstapel zusammen die Vielzahl von Lamellenstapeln darstellen,
eine erste Druckkammer (60) mit einer Fluidversorgung (136) und einem ersten Druckkolben (56), welcher für das Zusammenwirken der ersten Antriebslamellen mit den ersten angetriebenen Lamellen zur Übertragung eines Drehmoments bewegbar ist, wenn die erste Druckkammer (60) von der Fluidversorgung (136) unter Druck gesetzt wird,
eine zweite Druckkammer (68) mit einer Fluidzufuhr (138) und einem zweiten Druckkolben (58), der für das Zusammenwirken der zweiten Antriebslamellen mit den zweiten angetriebenen Lamellen zur Übertragung eines Drehmomentes bewegbar ist, wenn die zweite Druckkammer (68) **durch** die Fluidversorgung (138) unter Druck gesetzt wird,
eine Vielzahl von Kanälen (116, 122) zur Fluidzufuhr zu der ersten (60) und der zweiten (68) Druckkammer und der ersten (62) und zweiten (70) Ausgleichskammer und einem groß bemessenen Fluidzufuhrkanal (120), welcher eine Strömung von Kühl- und Schmierfluid zu der Kupplungsanordnung (10) ausbildet,
einen Fluidversorgungskanal (122) für jede Ausgleichskammer (62, 70) mit einer ersten (142) und einer zweiten (146) Öffnung in fluidischer Verbindung mit der Ausgleichskammer (62, 70), wobei die zweite Fluidöffnung (146) zur Aufnahme eines Fluids von der ersten Öffnung (142) ausgelegt ist und zur Fluidversorgung der Ausgleichskammer (62, 70) mit niedriger Fluidströmungsrate.

9. Kupplungssystem (10) nach Anspruch 8, worin die Fluidversorgung für jede Ausgleichskammer (62, 70) durch einen Fluidkanal (142, 144, 146) in Verbindung mit einer Fluidquelle und einem Steuersystem (110) dargestellt wird, wobei der Fluidkanal (142, 144, 146), welcher in einer stationären Fluidversorgungsmuffe (88) ausgebildet ist, um die das Kupplungssystem (10) rotiert, die erste Öffnung (142) zu der Ausgleichskammer (62, 70) an dem oberen Teil der Fluidversorgungsmuffe (88) angeordnet ist, die zweite Öffnung (146) an der Oberfläche der Muffe (88) ausgebildet ist und an einem unteren Teil der Muffe (88) platziert ist, mit einer Fluidleitung (144), welche in der Muffe (88) dargestellt ist, die erste (142) und die zweite (146) Öffnung verbunden sind.

10. Kupplungssystem (10) nach Anspruch 9, worin ein Fluidversorgungskanal (122) eine Versorgungsfluidströmung zu der ersten (62) und der zweiten (70) Ausgleichskammer, über die erste (142) und die zweite (146) Öffnung liefert, wobei die zweite Öffnung (146) zur Aufnahme von Fluid von der ersten Öffnung (142) mittels Gewichtskraftunterstützung über die Zufuhrleitung (144) eingerichtet ist und zur Versorgung der ersten (62) und der zweiten (70) Ausgleichskammer mit einer gewichtskraftunterstützten Fluidströmung (154).

11. Kupplungssystem (10) nach Anspruch 9, worin der Versorgungskanal (122), die erste Öffnung (142), die Versorgungsleitung (144) und die zweite Öffnung (146) zur Darstellung eines Fluidreservoirs (122, 142, 144, 146) zur Versorgung der ersten (62) und der zweiten (70) Ausgleichskammer ausgelegt sind, wenn die Fluidversorgung unterbrochen ist.

12. Kupplungssystem (10) nach Anspruch 9, worin der Fluidversorgungskanal (122) einen Choke (134) beinhaltet, welcher derart platziert ist, dass die Fluidströmung zu der Versorgungsleitung (144) gerichtet ist und eine Fluidströmung von Schmiermittel- und Kühlmittelpfaden (124) ermöglicht, wobei der Choke (134) derart ausgelegt ist, um eine Fluidströmung zu den Schmiermittel- und Kühlmittelpfaden (124) auszubilden, wenn die Fluidströmung durch den Fluidversorgungskanal (122) einen bestimmten Wert überschreitet.

13. Verfahren zur Darstellung einer Fluidströmung zu den Ausgleichskammern (62, 70) in einem Kupplungssystem (10), welches um eine zentrale Achse drehbar ist und eine Vielzahl (12, 14) von Kupplungslamellenstapeln aufweist, mit folgenden Schritten:
Darstellung eines Fluidversorgungs- und Steuersystems (110), welches derart angeordnet ist, um die Ausgleichskammern (62, 70) mit einer Menge von Fluid zu versorgen, womit ein ausreichender Betrag von Fluid in den Ausgleichskammern (62, 70) behalten wird, um den Fluiddruck auszugleichen, der durch die Zentrifugalkräfte durch die Rotation des Systems (10) entsteht und gegen den Druckkolben (56, 58) ausgeübt wird;
Darstellung eines Fluidversorgungskanals (122) für jede Ausgleichskammer (62, 70) mit einer ersten Öffnung (142), die in fluidischer Verbindung mit der Ausgleichskammer (62, 70) steht, **gekennzeichnet durch**
die Darstellung einer zweiten Öffnung (146) in fluidischer Verbindung mit der Ausgleichskammer (62, 70), beabstandet von der ersten Öffnung (142) und mit einer Versorgungsleitung (144) zwischendrin, wobei die zweite Öffnung (146) derart positioniert ist, um eine Fluidströmung von der ersten Öffnung (142) aufzunehmen und eine Fluidströmung (154) zu der Ausgleichskammer (62, 70) bereitzustellen, welche gewichtskraftunterstützt ist, mit entsprechend niedrigen Durchflussbedingungen.

14. Verfahren nach Anspruch 13, welches die Bereitstellung des Versorgungskanals (122), der ersten Öffnung (142), der zweiten Öffnung (146) und der Versorgungsleitung (144) mit ausreichendem Volumen umfasst, welche derart ausgelegt sind, dass ein Fluidreservoir (122, 142, 144, 146) dargestellt wird, zur wirksamen Versorgung der Ausgleichskammern (62, 70), wenn die Fluidversorgung unterbrochen ist.

15. Verfahren nach Anspruch 13, welches die Darstellung des Fluidversorgungskanals (122) beinhaltet mit einem Choke (134), welcher derart platziert ist, um die Fluidströmung direkt zu der zweiten Öffnung (146) über die Versorgungsleitung (144) zu führen, womit eine Fluidströmung zu dem System der der Schmiermittel- und Kühlmittelpfade (124) ermöglicht wird, wenn die Fluidströmungsmenge einen bestimmten Wert überschreitet.

16. Verfahren nach Anspruch 15, bei dem die Darstellung ein Chokes (134) und erste (142) und zweite (146) Öffnungen vorhanden sind, welche derart ausgelegt sind, um eine maximale Fluidströmung zu den Ausgleichskammern (62, 70) beizubehalten und überschüssiges Fluid über den Choke (134) in das System aus Schmiermittel- und Kühlmittelpfaden (124) zu führen zu der Ausgleichskammer (62, 70).

## Revendications

1. Système d'embrayage (10) rotatif autour d'un axe central comprenant :
une pluralité de piles de disques (12, 14), chaque pile de disques (12, 14) étant disposée pour transférer le couple d'une entrée de couple (16) à un arbre de sortie (22, 24),
une chambre de pression (60, 68) associée à chaque pile de disques (12, 14), chaque chambre de pression (60, 68) comportant une alimentation en fluide (136, 138) et un piston de pression (56, 58), le piston de pression (56, 58) étant disposé pour se mettre en prise de manière inverse et actionner la pile de disques (12, 14) transférant le couple de l'entrée de couple (16) à l'arbre de sortie (22, 24) lorsque la chambre de pression (60, 68) est mise sous pression par l'alimentation en fluide (136, 138) ;
une chambre d'équilibre (62, 70) associée à chaque piston de pression (56, 58), la chambre d'équilibre (62, 70) comportant une alimentation en fluide (142), la chambre d'équilibre (62, 70) étant disposée pour exercer une pression de fluide de compensation contre le piston de pression (56, 58) en opposition à une pression de fluide dans la chambre de pression (60, 68) induite par les forces centrifuges résultant de la rotation de l'ensemble d'embrayage (10), et
chaque chambre d'équilibre (62, 70) étant en communication fluidique avec une alimentation en fluide (144, 146), **caractérisé en ce que** l'alimentation en fluide est disposée pour procurer un écoulement assisté par gravité (154) vers la chambre d'équilibre (62, 70) dans des conditions de faible écoulement efficace pour maintenir une pression de fluide de compensation dans la chambre d'équilibre (62, 70) décalant la pression du fluide dans la chambre de pression (60, 68) induite par les forces centrifuges.

2. Système d'embrayage selon la revendication 1, dans lequel l'alimentation en fluide (144, 146) est prévue au moyen d'un canal d'alimentation (122) avec au moins une première ouverture (142) et une deuxième ouverture (146) en communication fluidique avec la chambre d'équilibre (62, 70), la deuxième ouverture (146) étant disposée pour recevoir le fluide provenant de la première ouverture (142) à travers un conduit d'alimentation (144) et pour délivrer le fluide vers la chambre d'équilibre (62, 70) par un écoulement assisté par gravité (154).

3. Système d'embrayage (10) selon la revendication 2, dans lequel l'alimentation en fluide (142, 144, 146) pour chaque chambre d'équilibre (62, 70) est prévue à travers une section d'alimentation généralement cylindrique, la première ouverture (142) vers la chambre d'équilibre (62, 70) est placée sur une partie en amont de la section de canal et la deuxième ouverture (146) est disposée sur une partie inférieure de la section de canal, et le conduit d'alimentation (144) étant disposé pour procurer un écoulement assisté par gravité (154) dans la deuxième ouverture (146).

4. Système d'embrayage (10) selon la revendication 3, dans lequel la section d'alimentation, la première ouverture (142), le conduit d'alimentation (144) et la deuxième ouverture (146) sont dimensionnés pour procurer un réservoir de fluide (142, 144, 146) efficace pour maintenir un écoulement de fluide (150, 154) vers la chambre d'équilibre (62, 70) lorsque l'alimentation en fluide est interrompue.

5. Système d'embrayage (10) selon la revendication 3, dans lequel le canal d'alimentation (122) comprend un étranglement (134) permettant un écoulement du fluide (156) vers les trajets de lubrification et de refroidissement (124) à travers le système d'embrayage (10), l'étranglement (134) étant dimensionné pour permettre au fluide (156) de circuler vers les trajets de lubrification et de refroidissement (124) lorsque l'écoulement du fluide dans le canal d'alimentation (122) dépasse un débit prédéterminé.

6. Système d'embrayage (10) selon la revendication 5, dans lequel les première (142) et deuxième (146) ouvertures et l'étranglement (134) sont dimensionnés pour maintenir un écoulement vers la chambre d'équilibre (62, 70) qui ne dépasse pas un débit prédéterminé lorsque le débit d'écoulement du canal d'alimentation (94) augmente.

7. Système d'embrayage (10) selon la revendication 5, dans lequel l'étranglement (134) est disposé pour diriger un écoulement du fluide dans le conduit d'alimentation (144) vers la deuxième ouverture de canal (146) dans des conditions de faible débit d'écoulement.

8. Système d'embrayage (10) selon l'une quelconque des revendications 1 à 7, **caractérisé par**
une première pile de disques (12) comportant un premier ensemble de disques d'entraînement raccordé en fonctionnement à une entrée de couple (16) et un premier ensemble de disques entraînés raccordé en fonctionnement à un premier arbre de sortie (22) et
une deuxième pile de disques (14) comportant un deuxième ensemble de disques d'entraînement raccordé en fonctionnement à une entrée de couple (16), et un deuxième ensemble de disques entraînés raccordé en fonctionnement à un deuxième arbre de sortie (24), alors que les première et deuxième piles de disques forment conjointement la pluralité de piles de disques,
une première chambre de pression (60) avec une alimentation en fluide (136) et un premier piston de pression (56) mobile pour mettre en prise les premiers plateaux entraîneurs avec les premiers disques d'embrayage transférant le couple entre eux lorsque la première chambre de pression (60) est mise sous pression par l'alimentation en fluide (136),
une deuxième chambre de pression (68) avec une alimentation en fluide (138) et un deuxième piston de pression (58) mobile pour mettre en prise les deuxièmes plateaux entraîneurs avec les deuxièmes disques d'embrayage transférant le couple entre eux lorsque la deuxième chambre de pression (68) est mise sous pression par l'alimentation en fluide (138),
une pluralité de canaux (116, 122) délivrant le fluide vers les première (60) et deuxième (68) chambres de pression et les première (62) et deuxième (70) chambres d'équilibre, et un canal d'alimentation en fluide à capacité élevée (120) procurant un écoulement de liquide de refroidissement et de lubrification vers l'ensemble d'embrayage (10),
le canal d'alimentation en fluide (122) pour chaque chambre d'équilibre (62, 70) comportant une première ouverture (142) et une deuxième ouverture (146) en communication fluidique avec la chambre d'équilibre (62, 70), la deuxième ouverture fluidique (146) étant disposée pour recevoir le fluide provenant de la première ouverture (142) et pour délivrer le fluide vers la chambre d'équilibre (62, 70) dans des conditions de faible débit d'écoulement.

9. Système d'embrayage (10) selon la revendication 8, dans lequel l'alimentation en fluide pour chaque chambre d'équilibre (62, 70) est procurée par un canal de fluide (142, 144, 146) en communication avec une source de fluide et un système de commande (110), le canal de fluide (142, 144, 146) étant formé dans un manchon d'alimentation en fluide stationnaire (88) autour duquel le système d'embrayage (10) tourne, la première ouverture (142) vers la chambre d'équilibre (62, 70) étant disposée sur une partie supérieure du manchon d'alimentation en fluide (88), la deuxième ouverture (146) étant formée dans la surface du manchon (88) et disposée sur une partie inférieure du manchon (88) avec un conduit de fluide (144) formé dans le manchon (88) raccordant les première (142) et deuxième (146) ouvertures.

10. Système d'embrayage (10) selon la revendication 9, dans lequel un canal d'alimentation en fluide (122) délivre l'écoulement de fluide vers les première (62) et deuxième (70) chambres d'équilibre à travers les première (142) et deuxième (146) ouvertures, la deuxième ouverture (146) étant disposée pour recevoir le fluide provenant de la première ouverture (142) grâce à la gravité à travers le conduit d'alimentation (144) et pour délivrer l'écoulement de fluide assisté par gravité (154) vers les première (62) et deuxième (70) chambres d'équilibre.

11. Système d'embrayage (10) selon la revendication 9, dans lequel le canal d'alimentation (122), la première ouverture (142), le conduit d'alimentation (144), et la deuxième ouverture (146) sont dimensionnés pour procurer un réservoir de fluide (122, 142, 144, 146) efficace pour alimenter les première (62) et deuxième (70) chambres d'équilibre lorsque l'alimentation en fluide est interrompue.

12. Système d'embrayage (10) selon la revendication 9, dans lequel le canal d'alimentation en fluide (122) comprend un étranglement (134) disposé pour diriger l'écoulement du fluide vers le conduit l'alimentation (144) et pour permettre un écoulement du fluide vers les trajets de lubrification et de refroidissement (124), l'étranglement (134) étant dimensionné pour permettre l'écoulement du fluide vers les trajets de lubrification et de refroidissement (124) lorsque le débit d'écoulement du fluide à travers le canal d'alimentation de fluide (122) dépasse un niveau prédéterminé.

13. Procédé destiné à procurer un écoulement de fluide vers les chambres d'équilibre (62, 70) dans un système d'embrayage (10) rotatif autour d'un axe central et comportant une pluralité (12, 14) de piles de disques d'embrayage comprenant les étapes consistant à :
procurer une alimentation en fluide et un système de commande (110) prévus pour délivrer le fluide vers les chambres d'équilibre (62, 70) à un débit efficace pour maintenir une quantité de fluide suffisante dans les chambres d'équilibre (62, 70) pour compenser les pressions de fluide induites par les forces centrifuges survenant de la rotation du système (10) et exercées contre un piston de pression (56, 58),
procurer une deuxième ouverture (146) en communication fluidique avec les chambres d'équilibre (62, 70) espacée de la première ouverture (142) avec un conduit d'alimentation (144) entre elles, la deuxième ouverture (146) étant disposée pour recevoir un écoulement de fluide provenant de la première ouverture (142) et pour procurer un écoulement de fluide (158) assisté par gravité vers les chambres d'équilibre (62, 70) dans des conditions de faible débit d'écoulement.

14. Procédé selon la revendication 13, comprenant l'étape consistant à prévoir le canal d'alimentation (122), la première ouverture (142), la deuxième ouverture (146), et le conduit d'alimentation (144) avec un volume suffisant, dimensionné pour procurer un réservoir de fluide (122, 142, 144, 146) efficace pour alimenter les chambres d'équilibre (62, 70) lorsque l'alimentation en fluide est interrompue.

15. Procédé selon la revendication 13, comprenant l'étape consistant à prévoir le canal d'alimentation en fluide (122) avec un étranglement (134) disposé pour diriger l'écoulement du fluide vers la deuxième ouverture (146) à travers le conduit d'alimentation (144) permettant un écoulement du fluide vers les trajets (124) de refroidissement et de lubrification du système lorsque le débit d'écoulement du fluide dépasse un niveau prédéterminé.

16. Procédé selon la revendication 15, comprenant l'étape consistant à prévoir un étranglement (134), et des première (142) et deuxième (146) ouvertures dimensionnées pour maintenir un écoulement de fluide maximal vers les chambres d'équilibre (62, 70) et pour diriger le fluide en excès à travers l'étranglement (134) dans les trajets (124) de refroidissement et de lubrification du système.
